Europäisches Patentamt

European Patent Office

Office européen des brevets

(11) Publication number: **0 303 029**
**A1**

## (12) EUROPEAN PATENT APPLICATION

(21) Application number: 88109802.4

(22) Date of filing: 20.06.88

(51) Int. Cl.4: **B64D 10/00 , A62B 17/00**

(30) Priority: 13.08.87 GB 8719198

(43) Date of publication of application:
15.02.89 Bulletin 89/07

(84) Designated Contracting States:
**DE ES IT**

(71) Applicant: **BTR plc**
**Silvertown House Vincent Square**
**London SW1P 2PL(GB)**

(72) Inventor: **Hawkins, James Mitchell**
**19 Harebell Close**
**Huntington Chester CH3 6RT(GB)**

(74) Representative: **Moore, John Hamilton et al**
**BTR Group Patent & Trade Mark Service P.O.**
**Box 504**
**Erdington Birmingham B24 9QH(GB)**

(54) **Pressurising system.**

(57) In an "anti-g" garment such as a pair of trousers, a pressurising system is provided which consists of a bifurcate bladder (10) and a bifurcate tube (20). Each limb (11, 12) of the bladder (10) extends inside one leg of the trousers, and each limb (21, 22) of the tube (20) extends inside the bladder, at least to the knee and preferably to the calf of the trousers.

Inflation of the bladder (20) therefore takes place from the lower end first, i.e. in a direction <u>opposite</u> to the g- imposed flow of blood of the wearer. This in turn minimises reduction of blood volume in the head of the wearer and raises the "black-out" threshold.

Fig.1.

## PRESSURISING SYSTEM

This invention relates to a pressurising system for anti-gravitational garments. Although the present invention will be described herein with particular reference to anti-gravitational trousers (hereinafter "anti-g trousers") it is not intended to be limited thereto.

Anti-g trousers are designed for aircrew who may be subjected to acceleration (g-forces), produced by a change in flight direction, which tend to drain blood from the brain and cause it to concentrate in the abdomen and legs. The reduction of blood volume in the head results in the gradual loss of peripheral vision and can also result in unconsciousness. Repeated applications of g-forces can cause considerable physical and mental fatigue.

Anti-g trousers are designed to automatically apply counter-pressure to the abdomen, thighs and legs, in proportion to the g-forces experienced, preventing the concentration of blood in these areas and resulting in the raising of black-out level by up to 2 g and the reduction of physical and mental fatigue.

The anti-g trousers are pressurised, for example, with compressed air, either from a separate cylinder or from the aircraft's pneumatic system.

Anti-g trousers are known which are provided with an inflatable bladder having restraining and adjusting means associated therewith. Inflation of the bladder takes place by way of a single hose inlet mounted at the waist. Thus, inflation occurs in the direction of the g-imposed blood flow, i.e. towards the feet of the wearer. The pressure exerted by the bladder may well be insufficient to retard this flow of blood and so to avoid loss of vision and/or consciousness.

It has previously been proposed to overcome the above-mentioned disadvantages by inflating the bladder from the lower end. Hirtherto, this could only be achieved by providing the inflation fluid through semi-rigid tubes mounted externally of the garment. Such an arrangement creates the additional disadvantage of loss of manoeuvreability on the part of the user.

We have now found that satisfactory "lower-end" inflation, together with little or no loss of manoeuvrability, can be achieved by inflating the bladder through internal, collapsible tubes, the inflation fluid being admitted to the bladder by means of a one-way valve having bypass inlet ports.

Acordingly, the present invention provides a pressurising system for an anti-gravitational garment, the system comprising one or more inflatable bladders having restraining and adjusting means associated therewith and an inflation hose and connector to convey a pressurising fluid to each said bladder, in which each said bladder is provided internally with a tube for the admission of said pressurising fluid, each said tube being collapsible in the absence of a positive internal pressure and extending over at least half the length of the bladder, the system further including a valve having one or more bypass inlet ports and one or more exhaust ports whereby, under a positive inlet pressure, said pressurising fluid is admitted to each said tube to inflate each said bladder and on release of said positive pressure, said pressurising fluid is exhausted through said exhaust ports.

The present invention also provides an anti-gravitational garment including a pressurising system as described in the immediately-preceding paragraph.

The tubes are preferably made of a lightweight, proofed fabric material, for example polyurethane - coated or neoprene-coated polyamide or polyester fabric material.

In a preferred embodiment of the present invention, the anti-g garment comprises a pair of trousers. In this case, the bladder will be bifurcate, each limb extending inside one leg of the trousers. The inflation tube will likewise be bifurcate. Each limb of the tube extends at least to the knee portion of the trousers (and suitably to the calf portion of the trousers).

In accordance with this preferred embodiment, the valve is provided with two bypass inlet ports, each port being in communication with a limb of the bifurcated tube.

The present invention will be illustrated, merely by way of example, in the following description and with reference to the accompanying drawings.

In the drawings :

Figure 1 is a schematic plan view of a pressurising system according to the present invention;

Figure 2 is a schematic sectional view of a valve for use in connection with the system of Figure 1.

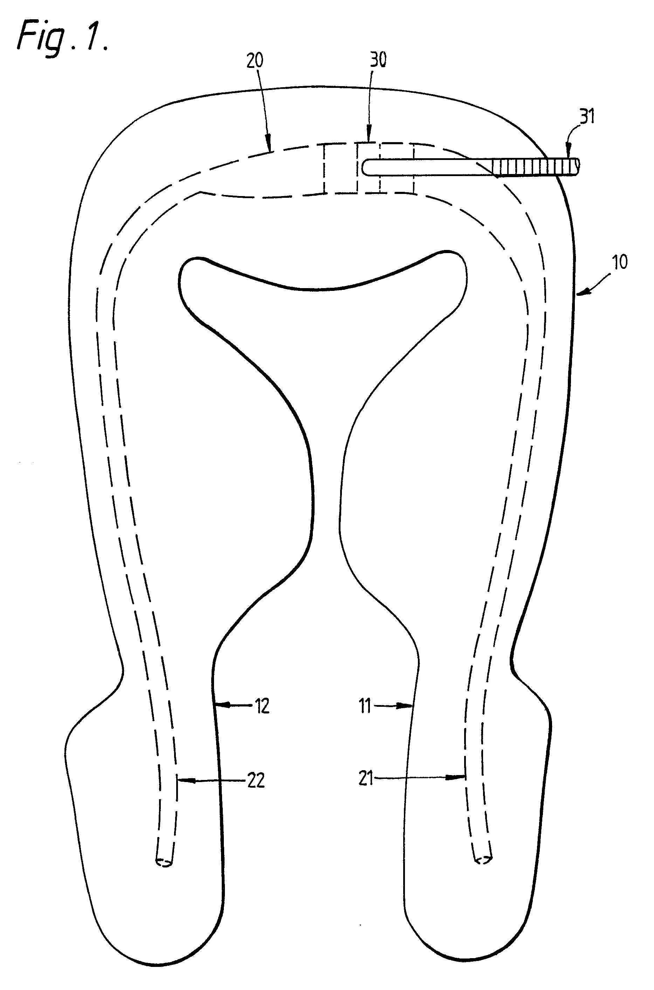

Figure 1 shows an inflatable bifurcate bladder 10 for use in a pair of anti-g trousers. The limbs 11 and 12 of the bladder each extend inside one leg of the trousers (not shown).

The bladder 10 is provided with an internal bifurcate inflation tube 20. The limbs 21 and 22 of the tube each terminate at a position corresponding to the calf portion of the trousers.

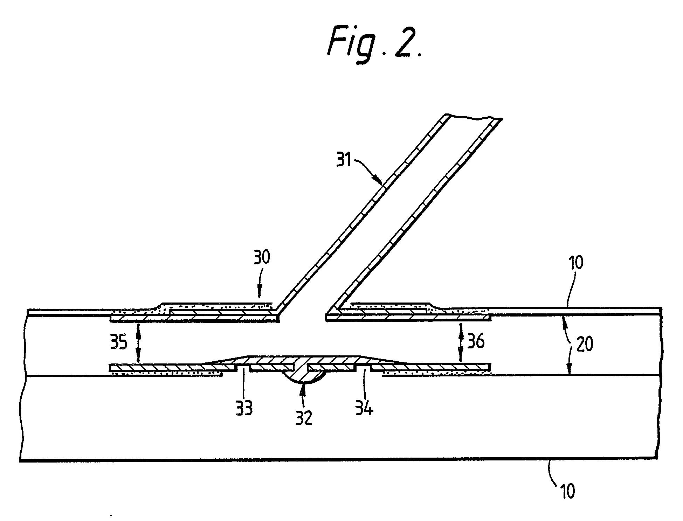

Pressurising fluid is admitted to tube 20 through valve 30 (see Figure 2) and a hose/connector assembly shown schematically at 31. The positive pressure of the fluid urges valve diaphragm 32 against exhaust ports 33 and 34 so that the fluid is deflected through inlet bypass ports 35 and 36 and into tube 20 to inflate bladder 10.

On release of the positive inlet pressure, the pressure of the fluid within bladder 10 deflects diaphragm 32 and opens exhaust ports 33 and 34, so that the fluid escapes through hose 31.

Release of the inlet pressure also causes fabric tube 20 to collapse, thereby preventing the escape of pressurising fluid through the tube.

## Claims

1. A pressurising system for an anti-gravitational garment, the system comprising one or more inflatable bladders having restraining and adjusting means associated therewith and an inflation hose and connector to convey a pressurising fluid to each said bladder characterised in that each said bladder (10) is provided internally with a tube (20) for the admission of said pressurising fluid, each said tube being collapsible in the absence of a positive internal pressure and extending over at least half the length of the bladder, the system further including a valve (30) having one or more bypass inlet ports (35, 36) and one or more exhaust ports (33, 34) whereby, under a positive inlet pressure, said pressurising fluid is admitted to each said tube (20) to inflate each said bladder (10) and on release of said positive pressure, said pressurising fluid is exhausted through said exhaust ports (33, 34).

2. A system according to Claim 1, characterised in that each said tube (20) is made of a lightweight, proofed fabric material, for example a polyurethane-coated or neoprene-coated polyamide or polyester fabric material.

3. A system according to Claim 1 or 2, characterised in that the garment comprises a pair of trousers and is provided with a bifurcate bladder (10), each limb (11, 12) of the bladder extending inside one leg of the trousers, together with a bifurcate tube (20), each limb (21, 22) of the tube extending at least to a position corresponding to the knee portion of the trousers.

4. A system according to Claim 3, characterised in that each limb (21, 22) of the tube (20) extends to a position corresponding to the calf portion of the trousers.

5. A system according to Claim 3 or 4, characterised in that the valve (30) is provided with two bypass inlet ports (35, 36) each port being in communication with a limb (21, 22) of the bifurcate tube (20).

# Fig.1.

# Fig.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 206 961 (S.E.E. PROVENCE PLASTIQUE) * Page 3, lines 11-24; page 4, lines 7-12; figures 1-3 * | 1,3-5 | B 64 D 10/00 A 62 B 17/00 |
| A | US-A-2 495 316 (D.M. CLARK et al.) * Column 3, lines 1-24; column 3, line 67 - column 4, line 4; column 6, lines 32-42; figures 1-10 * | 1,3,4 | |
| A | GB-A- 929 897 (SPEMBLY LTD) * Claim 6; figure 4 * | 1,2 | |
| A | FR-A-1 558 010 (FRANKENSTEIN GROUP LTD) * Page 2, left-hand column; figures 1-5 * | 1,3 | |

TECHNICAL FIELDS SEARCHED (Int. Cl.4)

B 64 D
B 64 G
A 62 B

The present search report has been drawn up for all claims

| Place of search | Date of completion of the search | Examiner |
|---|---|---|
| THE HAGUE | 18-11-1988 | ESTRELA Y CALPE J. |

EPO FORM 1503 03.82 (P0401)